# EUROPEAN PATENT SPECIFICATION

(11) **EP 1 600 115 B1**
(45) Date of publication and mention of the grant of the patent: **31.12.2008**
(21) Application number: 05008914.3
(22) Date of filing: 22.04.2005
(51) Int. Cl.: A61C 7/30

(54) **Ligature device for orthodontics**
Ligatur-Vorrichtung für die Kieferorthopädie
Dispositif de ligature pour orthodontie

(30) Priority: 26.05.2004 IT FI20040044
(43) Date of publication of application: 30.11.2005
(73) Proprietor: Leone S.p.A., 50019 Sesto Fiorentino (Firenze) (IT)
(72) Inventor: Scommegna, Gabriele, 50029 Tavarnuzze Impruneta (FI) (IT); Dolfi, Maurizio, 50143 Firenze (IT)
(74) Representative: Strasser, Wolfgang

(56) References cited:
- EP-A- 0 289 334
- EP-A- 1 169 977
- DE-A1- 10 013 818
- US-A- 5 540 586

## Description

The present invention relates to a ligature device for orthodontics according to the preamble of claim 1.

Orthodontic procedures, in which a plurality of orthodontic brackets are used, have widely been adopted for a long time. Each orthodontic bracket is cemented on the vestibular face of a tooth which belongs to a dental arch under treatment. Along each dental arch, a suitably preformed wire arch passes through the orthodontic brackets. On this purpose, each orthodontic bracket features a slot extending in the mesodistal direction, in which the above wire passes, as well as a retention base. The slot is positioned between two couples of wings emerging from said base which extend in the occlusal gingival direction, between which an elastic ring commonly said "binding" or "ligature" is applied, so as to prevent the wire escaping out of the slot.

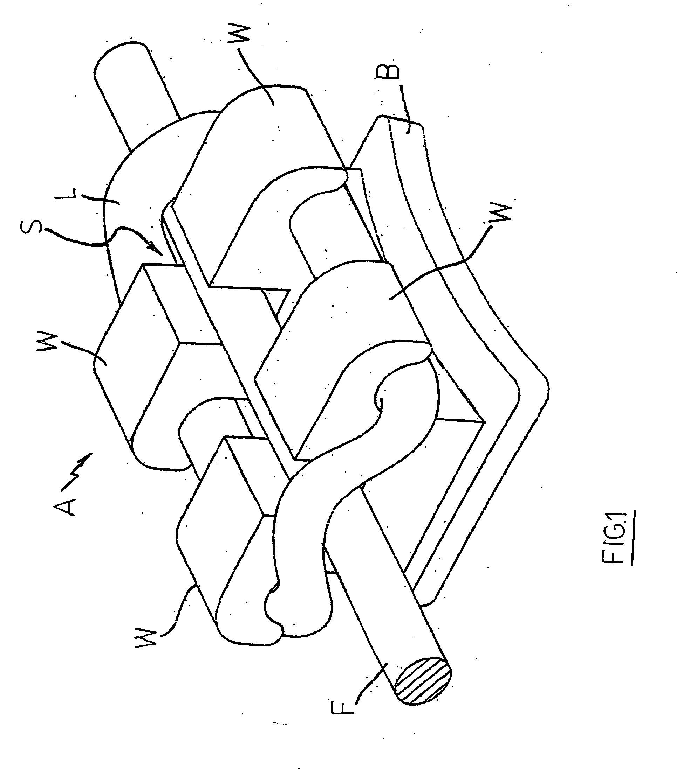

A well-known ligature system is shown in Fig.1 of the enclosed drawings, in which "A" indicates the orthodontic bracket, "B" indicates the corresponding base, "F" indicates the wire, "S" indicates the slot for wire "F", "L" indicates the ligature ring and "W" indicates the coupling wings for the ligature ring "L".

As the preformed wire, once it has been positioned in the slots of the complex of orthodontic brackets applied on the patient's teeth, tends to assume its original form, that is to say a form corresponding to an ideal dental arch, it produces a complex of corrective forces and transmits these forces to the each single tooth by means of the corresponding orthodontic brackets. However, as in the above ligature systems the movements of the preformed wire, which tends to assume its original form, generate remarkable friction due to the contact between the wire itself and the ligature rings mounted on each orthodontic bracket, the elastic energy accumulated in the wire is partially consumed to eliminate friction, so there is a general tendency to oversize the elastic load applied to the wire during the preforming phase. As each single ligature ring tends to lose its elasticity with time and the materials employed to build the preformed wires are such that the elastic energy returned to its original arch conformation during the return phase is constant during the time, the load applied on each tooth progressively increases. This may lead to serious biological damages for the patient and compels the odontologist to examine him frequently.

US 5540586 discloses a reinforced elastomeric non-hoop ligature comprising a thin flat body of the elastomeric material having incorporated therein a thin flat rigid insert of gingival-occlusal dimension grater than the corresponding dimension of the arch-wire receiving slot of the orthodontic bracket with which it is employed.

The rigid insert is intended to provide the possibility of controlling sliding friction between the arch-wire and the bracket.

A drawback of the above-mentioned ligature lies in that it is quite complex from a structural and manufacturing point of view and, consequently, it is quite expensive.

DE 10013818 discloses a ligature made of elastic material, comprising a central rectangular portion and two side rings provided on opposite sides with respect to said central portion. Each of said rings has a semicircular shape. When the ligature is to be mounted onto a bracket, each of said rings is to be stretched.

Obviously, said stretching step is to be carried out with the bracket being applied to the respective tooth but, in relation the very small dimensions of both the bracket and the ligature, the said stretching step results in a quite complex operation for the odontologis. Moreover, said stretching step involves remarkable stressing forces at the interface between the tooth and the bracket base, the latter being, in fact, cemented to the tooth vestibular face. Consequently, the cement applied between the tooth and the bracket base may be subject to weakening. Furthermore, the bracket may be subject to displacement.

The present invention aims at eliminating or at least at reducing the above inconveniences.

These results have been achieved, according to the present invention, by a device having the features described in claim 1. Further features of the present invention are the subject of the dependent claims.

Thanks to the present invention it is possible to guarantee an improved possibility of movement of the preformed wire both in the mesodistal direction and by flexion, outside the bracket wings, without modifying the shape or the nature of the preformed wire or of the orthodontic bracket. Therefore, the elastic overload of the wire during its pre-forming phase can be eliminated or considerably reduced, so as to allow a more correct application of the corrective forces on the interested teeth. Moreover, the binding or ligature device according to the present invention allows a remarkable reduction of the orthodontic treatment time, is easy to build, economic, comfortable for the patient, easy to use and reliable, even after a relatively long working time.

All the technicians who work in this field will better understand these advantages and further advantages and features of the present invention thanks to the following description and to the enclosed drawings as a practical explanation of this invention which should not be considered in a limited sense, wherein :
- Fig. 1 shows a schematic perspective view of a well-known ligature device mounted on an orthodontic bracket;
- Fig 2 shows a schematic perspective view of a ligature device according to the present invention mounted on the same orthodontic bracket of Fig.1;
- Fig. 3 is a view identical to that of Fig.2 which schematically shows a possible movement of the wire inside and outside the corresponding slot;
- Fig.4 shows a schematic view from "K" of the device shown in Fig. 3;
- Fig.5 shows a schematic plant view of the device shown in Fig.2;
- Fig.6 shows a schematic plant view of a ligature device according to the present invention in a rest configuration, that is in a un-stretched or non-use configuration;
- Figs.7-9 show an apparatus used to test a ligature device according to the present invention and compare its characteristics with those of a conventional ligature device;
- Figs. 10-14 schematically show the positioning of a ligature device according to the present invention on a conventional bracket;
- Fig.15 represents a plant view of further embodiment of a ligature device according to the present invention; Fig.16 is a perspective view of the device shown in Fig.15 in a use position.

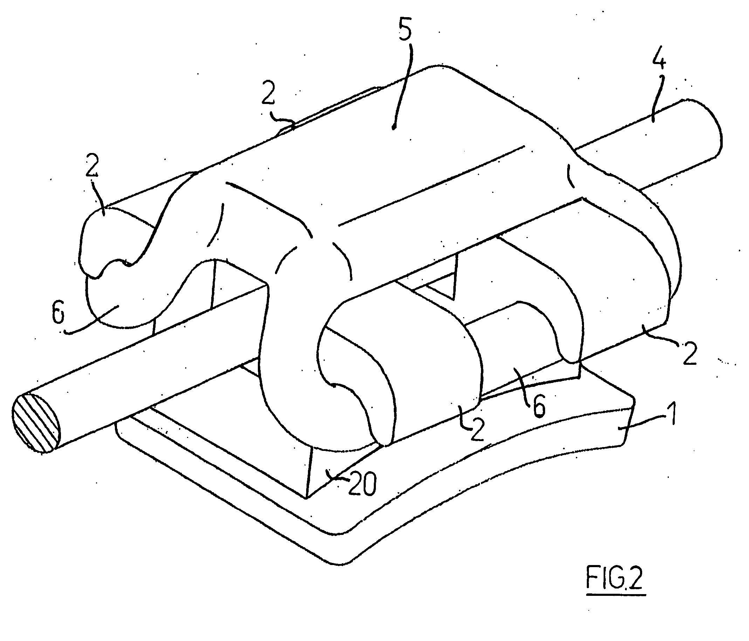

According to Figs. 2-5 of the enclosed drawings, a ligature device for orthodontic brackets according to the present invention is designed to be mounted on any orthodontic bracket available on the market, that is to say an orthodontic bracket comprising a base (1) with a surface (10) to be cemented on the vestibular face of a tooth and more wings defined by a body (20) which emerges from said base (1) on the side opposite to that of said surface (10). Said wings (2) extend in the occlusal gingival direction, while a slot (3) extends between them in the mesodistal direction, so as to allow the passage of a corresponding arch portion of a preformed wire (4). Moreover, each of said wings (2) features a lower surface, that is to say a surface (21) which is turned toward the base (1) of the orthodontic bracket so that the ligature device can be coupled with it, as described in detail below.

Said wire (4) can be of any kind available on the market.

A ligature device according to the present invention consists of a body in elastic, biocompatible material, comprising a central potion (5) having a basically rectangular plant and two side rings (6), that is to say two rings which are on opposite sides with respect to said central portion (5). Said rings (6) are basically developed along the longer sides of said central portion (5), that is to say developed according to the mesial-distal direction.

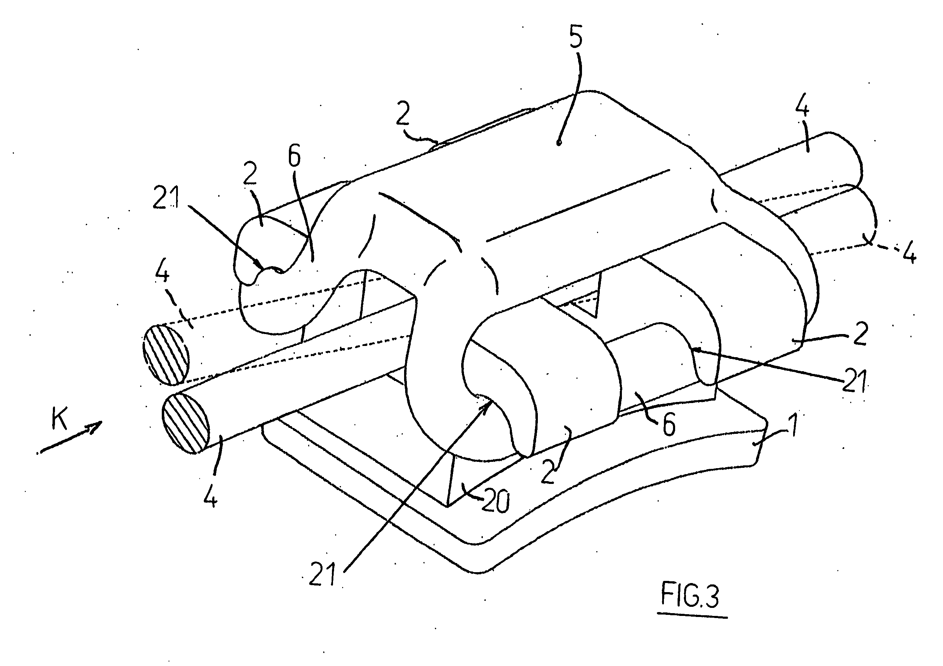

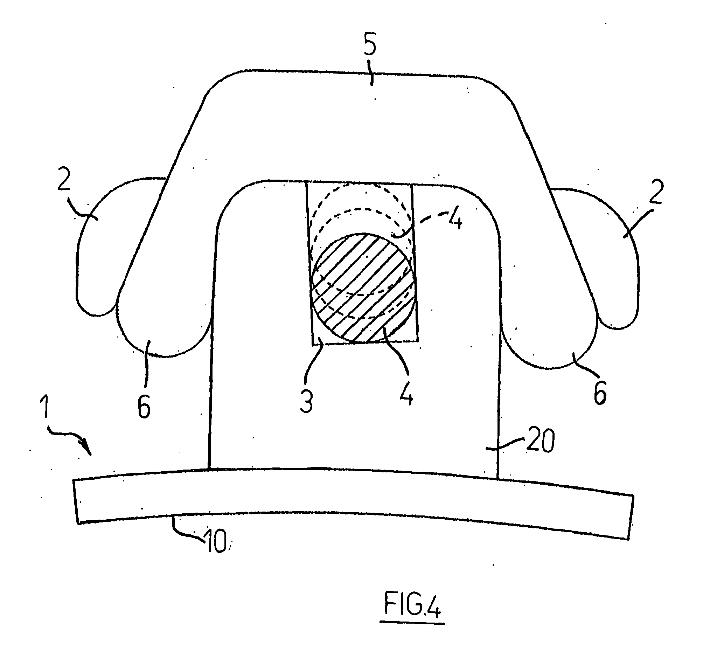

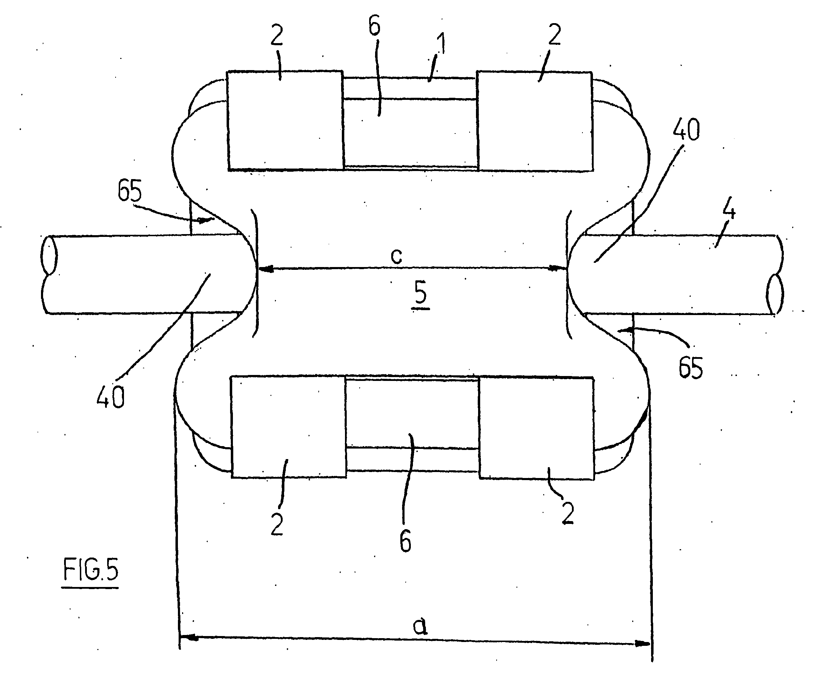

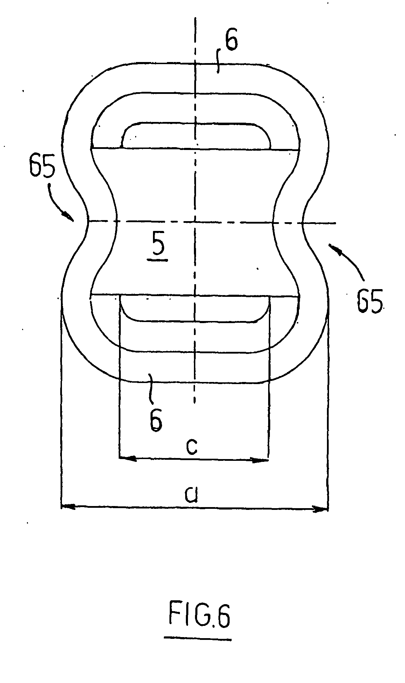

According to the example shown in Figs 2-5 of the enclosed drawings, each of the longer sides of said central portion (5) is also a part of a corresponding ring (6). Said body (5, 6) consists of a single, i.e. unitary, element and the length (a) of each lateral ring (6) exceeds the length (c) of the central body (5). In this way, as the central portion (5) of the ligature device is mounted above the wings (2) of a corresponding orthodontic aid and the lateral rings (6) are coupled with the lower surfaces (21) of the same wings, and the rings are longer than the central portion, the wire (4) cannot escape out of the slot but it is free to move in correspondence of the two shorter sides of said central portion (5). In other terms, as rings (6) are longer than the central portion (5) of the ligature device, the latter is provided with two curves (65), well visible in the plant view of Fig. 5, as well as in Fig.6, which leave two corresponding portions (40) of the wire (4) uncovered. Therefore, said wire portions (40) are free to move (compatibly with the upper link consisting of the central portion 5 of the device and with the lower link consisting of the base 1 of the orthodontic bracket) as Figs 3 and 4 schematically show. The vertex of each of said curves (65) is turned toward the orthodontic bracket, that is to say toward the above mentioned central portion (5). These features of the ligature device offer the above-mentioned advantages.

The length (a) of each lateral ring (6) exceeds the length (c) of the central body (5) both when the device is in use, i.e. applied to the bracket as shown in Figs.2-5, and when the device is in a rest condition, that is to say before to be applied to the bracket, as in Fig.6. In other words, the above-mentioned curves are pre-formed curves. Again in other words, the present ligature device provides the above-mentioned curves when it is stretched, that is, in use, as well as when it is un-stretched, that is, relaxed or not in use. Therefore, the value of ratio (a)/(c) is ever less than one (a/c < 1).

The example shown in Figs 2-6 of the enclosed drawings refers to a symmetric embodiment of the ligature device, with said curves (65) which are symmetrically positioned in correspondence of the two short sides of said central portion (5).

However, the above device can obviously be asymmetric, i.e. it can feature only one of said curves (65) in correspondence of one short side of the central portion (5) of the ligature device. In this case, the above mentioned freedom of movement of wire (4) is guaranteed on one side of the orthodontic bracket only instead of on both sides of the latter.

"Long side" or "longer side" obviously means a side which extends in the mesodistal direction and "short side" or "shorter side" means a side which extends in the occlusal-gingival direction.

The above device can be made, for example, in thermoplastic polyuretane, in any colour.

The hardness of the material used for the above ligature device preferably ranges from Shore A 80 to Shore A 90.

Tests have been carried out to compare the frictional forces generated by the present elastomeric ligature (NCL) and conventional elastomeric ligatures (CL). An experimental model reproducing the right buccal segment of the upper arch and consisting of five stainless steel 0.56 mm (0.022") preadjusted brackets (from the second premolar through the central incisor) was used to assess both static and kinetic frictional forces produced by NCL and by CL. The frictional forces generated by 0.48x0.64 mm (0.019"x 0.025") stainless steel wire with the two types of elastomeric ligatures were recorded by sliding the wire unto the aligned brackets. The friction produced by 0.36 mm (0.014") super elastic nickel titanium wire was evaluated both in presence of aligned brackets and of 3-mm misaligned canine bracket. The amount of both static and kinetic friction was minimal (<10 g) in the NCL group in presence of aligned brackets with both types of wires, while it ranged from a minimum of 95.6 g for the 0.36 mm (0.014") super elastic nickel titanium wire to a maximum of 590.7 g for the 0.48x0.64 mm (0.019"x 0.025") stainless steel wire when using CL. The amount of both static and kinetic friction in presence of misaligned canine bracket in the NCL group was less than the half of that shown by the CL group.

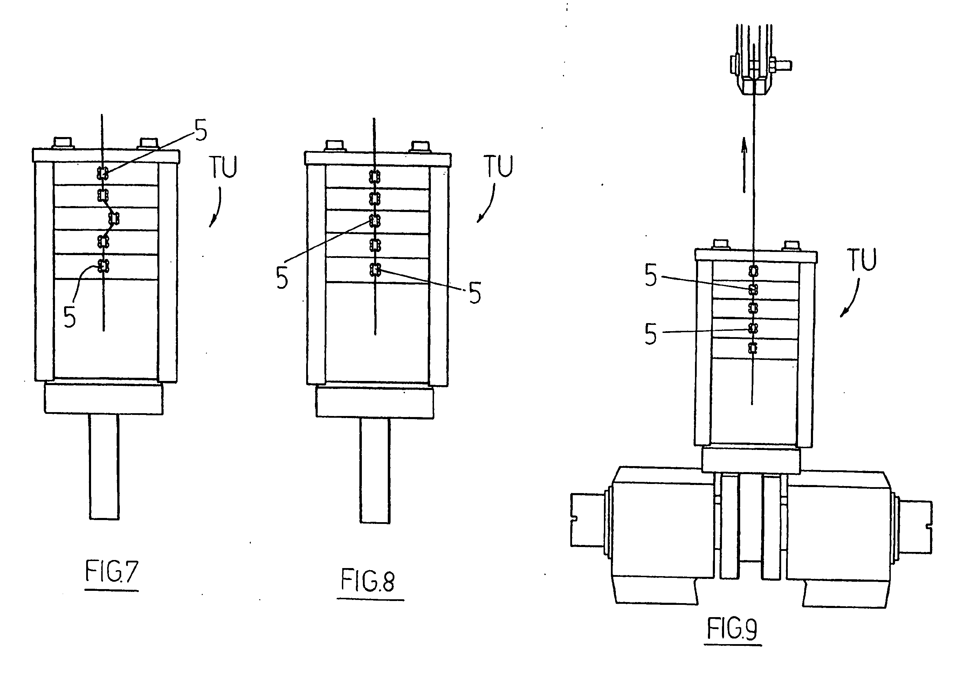

An experimental model reproducing the right buccal segment of the upper arch was used to assess the frictional forces produced by the present non-conventional elastomeric ligatures (NCL) (Figs. 2-6) and by conventional elastomeric ligatures (CL) (Fig. 1). All materials used in this study were supplied by Leone Orthodontic Products (Sesto Fiorentino, Firenze, Italy). The buccal segment model consisted of five stainless steel 0.56 mm (0.022") preadjusted brackets for the second premolar, first premolar, canine, lateral incisor, and central incisor (STEP® brackets). A section of 0.53x0.71 mm (0.0215"x 0.028") stainless steel wire was used to align the brackets prior to blocking them inside a vice-like device (Fig. 8). The distance between the brackets was set at 19 mm.

Two different types of 18-cm-long wires were tested: 0.48x0.64 mm (0.019"x 0.025") stainless steel wire and 0.36 mm (0.019") super elastic nickel titanium wire (Memoria® wire). The two types of wires were secured into the preadjusted brackets by using two types of elastomeric ligatures produced by injection molding: non-conventional ligatures and conventional elastomeric ligatures (silver mini modules). The frictional forces generated by the 0.48x0.64 mm (0.019"x 0.025") stainless steel wire with the two types of elastomeric ligatures were recorded by sliding the wire into the aligned brackets. Friction produced by the 0.36 mm (0.014") super elastic nickel titanium wire with the two types of elastomeric ligatures was evaluated both in presence of aligned brackets and of misaligned canine bracket (Fig. 7). The vice-like device was allowed to create a 3 mm misalignment of the canine bracket in an upward direction.

The friction generated by the testing unit consisting of wire, brackets, and elastomeric ligatures were measured under dry conditions and at room temperature (20° ± 2° C) by means of an Instron 4301 testing machine (Instron Corp., Canton, Massachusetts, USA) with a load cell of 10 Newton. The testing unit is denoted by the reference "TU" in Figs. 7-9. The test wire was inserted into the testing unit and its bottom end clamped by a vice and mounted on the Instron crosshead (Fig. 9). The elastomeric ligatures were placed immediately before each test run, to avoid ligature force decay. Frictional forces produced by each wire/ligature combination with aligned brackets for the 0.48x0.64 mm (0.019"x 0.025") stainless steel wire, and with both aligned and misaligned brackets for the 0.36 (0.014") super elastic nickel titanium wire were tested 10 times with new wires and ligatures on each occasion.

A total of 60 tests (30 tests for each type of elastomeric ligatures) were carried out. Static and kinetic friction forces were recorded while 15 mm of wire were drawn through the brackets at a speed of 15 mm/min. Static friction was defined as the force needed to start the wire moving through the bracket assembly. This force was measured as the maximal initial rise on the Instron chart trace. Kinetic friction was calculated by averaging the recordings after 2 mm, 5 mm and 10 mm of movement.

Descriptive statistics including mean, median, standard deviation (SD), minimum, and maximum values were calculated for the static and kinetic frictional forces produced by wire/ligature combination with both aligned brackets and misaligned brackets. As normal distribution of the data was not found (Shapiro Wilk test), the comparisons between the results for the two types of ligatures were carried out by means of a non-parametric test for independent samples (Mann-Whitney U Test).

All statistical computations were performed by means of statistical software (SigmaStat 3.0, SPSS Inc. Chicago, Illinois, USA).

The descriptive statistics and the analysis of the comparisons on static and kinetic frictional forces for the two ligature systems are shown in Tables 1 and 2. The Mann-Whitney test revealed significant differences between CL and NCL for both types of frictional forces for all tested variables (p<0.001): use of 0.48x0.64 mm (0.019"x0.025") stainless steel wire with aligned brackets, and use of 0.36mm (0.014") super elastic nickel titanium wire both in presence of aligned brackets and of 3 mm-misaligned canine bracket.

The amount of both static and kinetic friction was minimal (<10 g) in the NCL group in the presence of aligned brackets with both 0.48x0.64 mm (0.019"x 0.025") stainless steel and 0.36mm (0.014") super elastic nickel titanium wires, while it ranged from a minimum of 95.6 g for the 0.36mm (0.014") super elastic nickel titanium wire to a maximum of 590.7 g for the 0.48x0.64 mm (0.019"x0.025")stainless steel wire when using CL. The amount of both static and kinetic friction in presence of misaligned canine bracket in the NCL group was less than the half of that shown by the CL group.

Clinic cases have demonstrated that the above-mentioned reduced friction combined with the pre-formed curves (65) of the ligature lead to a remarkable reduction of the orthodontic treatment time.

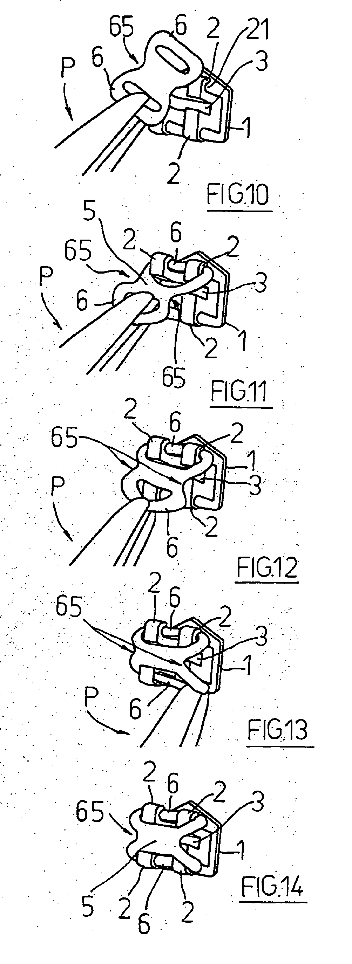

As shown in Figs. 10-14, a ligature device according to the present invention is apt to be positioned on a conventional bracket by simply using a tool (P) of the type commonly used by orthodontists. The procedure shown in Figs. 10-14 involves the following steps:
- clamping the ligature, by means of a clamp type tool (P), in correspondence of a ring (6) thereof (Fig.10);
- engaging the opposed ring (6), that is the one not clamped by the tool (P), to the lower side (21) of the upper wings (2) of the bracket (Figs.11 and 12);
- slightly stretching of the clamped ring and engaging the latter to the lower side (21) of the lower wings (2) of the bracket (Figs.13 and 14).

As shown in figs.10-14 there is no need to stretch the ligature device to obtain the above-mentioned curves (65) and leave uncovered two opposed portions of the slot (3).

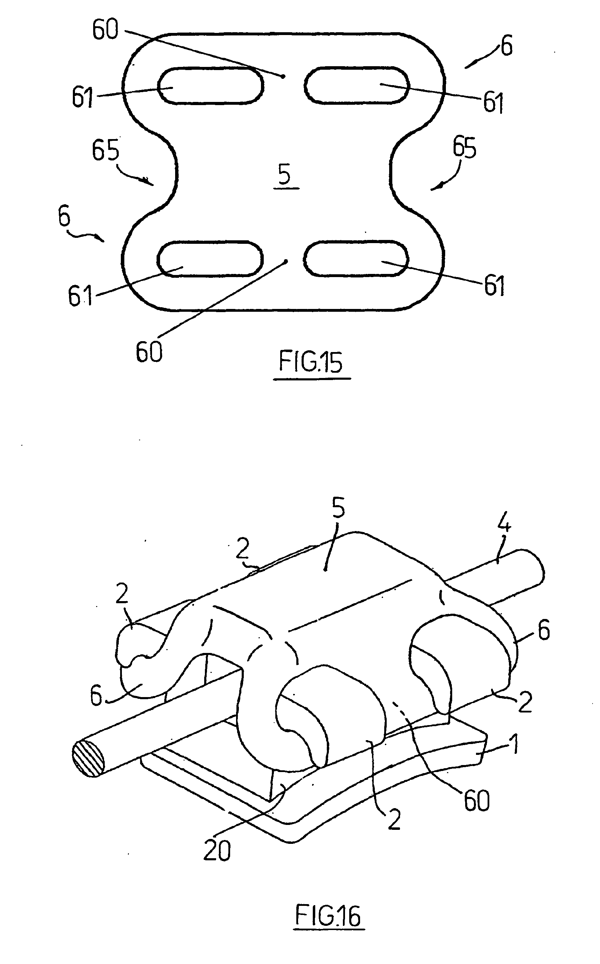

The embodiment shown in Figs.15 and 16 differs from the one previously described in that a central wall (60) is provided within each ring (6), thus subdividing each ring (6) into two smaller rings (61). Each of said smaller rings (61) is intended to be positioned astride of a corresponding wing (2) of the bracket. This feature of the ligature device allows an even more stable anchoring of the same to the orthodontic bracket. It should be understood that while the present invention has been described in detail with respect to certain specific embodiments thereof, it should not be considered limited to such embodiments.

**Table 1: Descriptive statistics and statistical comparisons of static frictional forces (g)**

| | **Conventional ligatures (CL)** | | | | | **Ligatures of the present invention (NCL)** | | | | | **Sig.** |
|---|---|---|---|---|---|---|---|---|---|---|---|
| | **Mean** | **Median** | **SD** | **Min** | **Max** | **Mean** | **Median** | **SD** | **Min** | **Max** | |
| 0.019"x0.025" SS aligned br. | 590.7 | 587.3 | 38.1 | 529.1 | 656.2 | 8.3 | 3.0 | 10.5 | 1.3 | 31.7 | * |
| 0.014" SE aligned br. | 156.4 | 155.0 | 10.8 | 133.6 | 173.6 | 0.7 | 0.5 | 0,5 | 0.2 | 1.6 | * |
| 0.014" SE misaligned br. | 255.9 | 253.4 | 68.5 | 155.0 | 347.7 | 105.1 | 109.6 | 18.8 | 78.5 | 135.6 | * |

| | | | | | | | | | | | |
|---|---|---|---|---|---|---|---|---|---|---|---|
| *p<0.001 | | | | | | | | | | | |

**Table 2: Descriptive statistics and statistical comparisons of kinetic frictional forces (g)**

| | **Conventional ligatures (CL)** | | | | | **Ligatures of the present invention (NCL)** | | | | | **Sig_{.}** |
|---|---|---|---|---|---|---|---|---|---|---|---|
| | **Mean** | **Median** | **SD** | **Min** | **Max** | **Mean** | **Median** | **SD** | **Min** | **Max** | |
| 0.019"x0.025" SS aligned br. | 541.6 | 538.6 | 41.7 | 491.4 | 631.6 | 0.9 | 1.0 | 0.4 | 0.4 | 1,6 | * |
| 0.014" SE aligned br. | 95.6 | 92.3 | 20.6 | 66.3 | 137.7 | 0.1 | 0.1 | 0.1 | 0.0 | 0,4 | * |
| 0.014" SE misaligned br. | 176.9 | 178.5 | 20.4 | 147.9 | 203.9 | 82.7 | 82.6 | 12.9 | 65.3 | 103.0 | * |

| | | | | | | | | | | | |
|---|---|---|---|---|---|---|---|---|---|---|---|
| *p<0.001 | | | | | | | | | | | |

## Claims

1. Ligature device for orthodontic brackets consisting of an elastic body with a central portion (5) and two lateral rings (6), the central portion (5) having two longer and two shorter sides, wherein the lateral rings (6) are developed along the longer sides of said central portion (5) and provided on opposite sides with respect to the latter, wherein, as the lateral rings (6) are longer than the central portion (5), the ligature device is provided with at least one pre-formed curve (65) corresponding to a shorter side of the central portion (5), the vertex of said at least one curve (65) being turned toward said central portion (5), **characterized in that** the length (a) of each of said lateral rings (6) exceed the length (c) of said central portion (5) both when the lateral rings (6) are stretched and un-stretched.

2. Ligature device according to claim 1, **characterized in that** a central wall (60) is provided within each lateral ring (6), thus subdividing each lateral ring (6) into two smaller rings (61).

3. Device according to claim 1 **characterized in that** it is made of thermoplastic polyutherane.

4. Device according to claim 1 **characterized in that** its hardness ranges from Shore A80 to Shore A90.

## Patentansprüche

1. Ligaturvorrichtung für kieferorthopädische Bügel, die aus einem elastischen Körper mit einem zentralen Teil (5) und zwei seitlichen Ringen (6) besteht, wobei der zentrale Teil (5) zwei längere und zwei kürzere Seiten besitzt und wobei die seitlichen Ringe (6) sich längs der längeren Seiten des zentralen Teils (5) erstrecken und auf dessen einander gegenüberliegenden Seiten angeordnet sind, wobei deswegen, weil die seitlichen Ringe (6) länger sind als der zentrale Teil (5) die Ligaturvorrichtung mit wenigstens einer vorgeformten Krümmung (65) versehen ist, die einer kürzeren Seite des zentralen Teils (5) entspricht, wobei der Scheitel der wenigstens einen Krümmung (65) zum zentralen Teil (5) hin gewendet ist, **dadurch gekennzeichnet, dass** die Länge (a) eines jeden der seitlichen Ringe (6) die Länge (c) des zentralen Teils (5) sowohl dann übersteigt, wenn die seitlichen Ringe (6) gestreckt sind, als auch dann, wenn sie nicht gestreckt sind.

2. Ligaturvorrichtung nach Anspruch 1, **dadurch gekennzeichnet, dass** innerhalb eines jeden seitlichen Ringes (6) eine zentrale Wand (60) vorgesehen ist, wodurch jeder seitliche Ring (6) in zwei kleinere Ringe (61) unterteilt ist.

3. Vorrichtung nach Anspruch 1, **dadurch gekennzeichnet, dass** sie aus thermoplastischen Polyurethan besteht.

4. Vorrichtung nach Anspruch 1, **dadurch gekennzeichnet, dass** ihre Härte in einem Bereich von A80 Shore bis A90 Shore liegt.

## Revendications

1. Dispositif de ligature pour plaquettes orthodontiques, consistant en un corps élastique avec une portion centrale (5) et deux anneaux latéraux (6), la portion centrale (5) présentant deux côtés plus courts et deux côtés plus longs, où les anneaux latéraux sont développés selon les côtés les plus longs de ladite portion centrale (5) et ils sont de côtés opposés par rapport à cette dernière, où, puisque les anneaux latéraux (6) sont plus longs de la portion centrale (5), le dispositif de ligature est pourvus d'au moins une courbe prè-formée (65) en correspondance d'un côté plus court de ladite portion centrale (5), le sommet de ladite au moins une courbe (65) étant tourné vers ladite portion centrale (5), **caractérisé en ce que** la longueur (a) de chacun desdits anneaux latéraux (6) est majeure de la longueur (c) de ladite portion centrale (5) soit lorsque les anneaux (6) sont étendus que lorsque ils ne les sont pas.

2. Dispositif selon la revendication 2 **caractérisé en ce que** dans chacun desdits anneaux latéraux (6) est prévue une paroi centrale (60), ainsi à subdiviser chaque anneau latéral (6) en deux anneaux (61) plus petits.

3. Dispositif selon la revendication 1 **caractérisé en ce que** il est en polyuréthane thermoplastique.

4. Dispositif selon la revendication 1 **caractérisé en ce que** sa dureté est comprise antre A80 Shore et A90 Shore.
